(19) **Europäisches Patentamt / European Patent Office / Office européen des brevets**

(11) **EP 1 477 523 B1**

(12) **EUROPEAN PATENT SPECIFICATION**

(45) Date of publication and mention
of the grant of the patent:
**14.02.2007 Bulletin 2007/07**

(21) Application number: **03743024.6**

(22) Date of filing: **25.02.2003**

(51) Int Cl.:
*C08L 21/00* $^{(2006.01)}$     *C08L 77/00* $^{(2006.01)}$

(86) International application number:
**PCT/JP2003/002088**

(87) International publication number:
**WO 2003/072652 (04.09.2003 Gazette 2003/36)**

(54) **ELASTOMER COMPOSITION AND PAPER FEED ROLLER**

ELASTOMERZUSAMMENSETZUNG UND PAPIERTRANSPORTWALZE

COMPOSITION ELASTOMERE ET ROULEAU D'ALIMENTATION EN PAPIER

(84) Designated Contracting States:
**DE FR GB IT**

(30) Priority: **26.02.2002 JP 2002049768**
**08.07.2002 JP 2002198747**
**29.10.2002 JP 2002315032**

(43) Date of publication of application:
**17.11.2004 Bulletin 2004/47**

(73) Proprietor: **SUMITOMO RUBBER INDUSTRIES, LTD.**
**Kobe-shi,**
**Hyogo 651-0072 (JP)**

(72) Inventors:
• **MABUCHI, T.,**
c/o Sumitomo Rubber Industries Ltd
Kobe-shi,
**Hyogo 651-0072 (JP)**
• **HATTORI, T.,**
c/o Sumitomo Rubber Industries Ltd
Kobe-shi,
**Hyogo 651-0072 (JP)**
• **MIZOGUCHI, T.,**
c/o Sumitomo Rubber Industries Ltd
Kobe-shi,
**Hyogo 651-0072 (JP)**

(74) Representative: **Manitz, Finsterwald & Partner GbR**
**Martin-Greif-Strasse 1**
**80336 München (DE)**

(56) References cited:
| | |
|---|---|
| EP-A- 0 529 378 | EP-A- 0 574 229 |
| WO-A-02/066558 | DE-A1- 4 211 061 |
| JP-A- 7 011 059 | JP-A- 63 041 554 |
| US-A- 4 883 836 | US-A- 5 003 003 |
| US-A- 5 075 380 | US-A1- 2002 004 555 |

**Description**

TECHNICAL FIELD

The present invention relates to an elastomer composition and a paper-feeding roller composed of the elastomer composition. More particularly, the components of the elastomer composition and the phase structure thereof are improved to enhance the friction coefficient and wear resistance thereof so that the elastomer composition is suitable for the paper-feeding roller, required to have a high affinity for a recording liquid, which is used in a paper-feeding mechanism of an image-forming apparatus such as an ink jet printer.

BACKGROUND ART

In the field of a polymer alloy formed by blending different kinds of polymers to produce new properties, mixing polyolefin with nylon has been utilized as an art of obtaining a high impact strength. More specifically, in order for a nylon-rubber alloy to display a sufficiently high impact strength, it is necessary that the distance between rubber particles is smaller than a critical value ($0.304\mu$m). Therefore to obtain a high impact strength, it is important to disperse rubber particles finely in a nylon matrix. Researches for this purpose are made.

By grafting maleic anhydride acid in an amount as small as about 1% to EPM, a material in which very fine grafted EPM is dispersed is obtained in the nylon matrix. The diameter of a particle of the grafted EPM is about 100nm.

As described above, in most of conventional compositions containing polyamide thermoplastic resin and rubber, the polyamide thermoplastic resin forms the matrix phase.

For example, in the thermoplastic elastomer disclosed in Japanese Patent Application Laid-Open No. 2000-129047, the polyamide elastomer forms the matrix phase, while the ethylene-ester acrylate copolymer rubber component forms the dispersion phase. Similar compositions in which a polyamide forms the matrix phase are disclosed in US 2002/0004555, EP 0 574 229 A1, DE 4 211 061 A1, EP 0 529 378 A1 and US 5,003,003. In the thermoplastic elastomer disclosed in Japanese Patent Application Laid-Open No. 8-311251, the thermoplastic resin such as polyolefin forms the matrix phase, while the rubber such as EPDM forms the domain.

In Japanese Patent Application Laid-Open No. 10-251452, there is disclosed the rubber composition containing fine particles, consisting of nylon, dispersedly present in the hydrogenated NBR elastomer matrix and the ethylene copolymer containing functional groups.

JP 07-011,059 discloses a composition consisting of a rubber constituent containing a staple fiber and/or particles, wherein the rubber constituent may be EPDM and the particles may be made of polyamide.

A paper-feeding roller is used in a paper-feeding mechanism of an office automation apparatus such as an ink jet printer, a laser printer, an electrostatic copying apparatus, a facsimile apparatus, an automatic deposit payment machine (ATM), and the like to separately pick up an object such as paper or films. Because the paper-feeding roller is required to feed sheets of paper by picking them up one by one and separating them from each other, the paper-feeding roller is demanded to have excellent flexibility and high wear resistance. However, if the paper-feeding roller obtains a high friction coefficient, the wear resistance thereof deteriorates. It is very difficult for a material of the same system to satisfy the demand of obtaining both the excellent flexibility and the high wear resistance.

Of the paper-feeding rollers of this kind, the paper-feeding roller used in the ink jet printer is demanded to have a high affinity (compatibility) for a recording liquid (aqueous ink). The recording liquid for the ink jet printer contains much polar components such as water and polyvalent alcohol. Thus if the paper-feeding roller has a low affinity for the recording liquid, the recording liquid is applied unfavorably to a portion of the paper-feeding roller which contacts the recording liquid when the paper-feeding roller feeds paper and thus the trace of the paper-feeding roller is left on paper.

As the material for the paper-feeding roller of this kind, vulcanized oil-extended EPDM is conventionally used, and vulcanized oil-extended chlorinated polyethylene is also used. However, these vulcanized rubbers have problems that the initial friction coefficients thereof are not high, and the friction coefficients thereof become low with the increase of the number of sheets of paper supplied to the paper-feeding roller. Further the vulcanized oil-extended EPDM or a dynamically crosslinked thermoplastic composition containing the oil-extended EPDM and a thermoplastic resin having a low polarity or a thermoplastic elastomer is entirely nonpolar. Therefore these compositions do not have a low affinity for the polar recording liquid such as the aqueous ink.

In view of these points, as disclosed in Japanese Patent Application Laid-Open No. 2002-69264, the present applicant proposed the paper-feeding roller made of the thermoplastic elastomer in which the rubber is finely dispersed by using the dynamic crosslinking method so that the thermoplastic elastomer is as durable, elastic, and flexible as the vulcanized rubber and as moldable as a thermoplastic resin.

For example, as disclosed in Japanese Patent Application Laid-Open No. 11-236465, the present applicant proposed the rubber roller formed from the thermoplastic elastomer composition in which the rubber component is dynamically crosslinked with the resin crosslinking agent to disperse the rubber component in the mixture of the hydrogenated styrene thermoplastic elastomer and the olefin resin.

The above-described nylon-rubber alloy material shows a preferable mechanical characteristic that it has a high impact strength. The particle diameter of finely grafted EPM used to be about 100nm. However, the nylon of the rubber composition forms the matrix and thus the rubber composition has a high hardness, which is unsuitable for using the rubber composition as the paper-feeding roller.

The composition disclosed in Japanese Patent Application Laid-Open No. 2000-12904 has the morphology that the polyamide elastomer forms the matrix phase thereof and that the rubber component forms the dispersion phase. The composition disclosed in Japanese Patent Application Laid-Open No. 8-31125 has the morphology that the thermoplastic resin forms the matrix phase thereof and that the rubber component forms the dispersion phase. When the polyamide resin such as nylon forms the matrix, the hardness of the composition is so high that the paper-feeding roller formed from the composition is incapable of obtaining a sufficient paper-feeding performance and hence cannot be put into practical use. Because polyamide is a thermoplastic resin, it flows when it is fused and pressed, and separation of the phases progresses.

Fine particles consisting of nylon are dispersedly present in the rubber composition disclosed in Japanese Patent Application Laid-Open No. 10-251452. But the rubber composition may have a low wear resistance in dependence on the dispersion state of the fine particles. When the rubber composition is used for the paper-feeding roller, the paper-feeding roller is incapable of obtaining a sufficient friction coefficient and thus incapable of obtaining a sufficient paper-feeding performance. Therefore the paper-feeding roller is not suitable for practical use.

Nowadays the life of a copying apparatus and a printer has become long and the degree of durability demanded therefor has become high. Further owing to reduction of the number of component parts of the copying apparatus and the printer, the copying apparatus and the printer are frequently used with a high load applied thereto. Therefore further improvement of the durability of the paper-feeding roller is demanded.

The paper-feeding roller disclosed in Japanese Patent Application Laid-Open No. 2002-69264 does not leave the trace of the paper-feeding roller when it is used for an ink jet printer or the like. Thus the paper-feeding roller can be used suitably therefor. However, there is room for improvement of its friction coefficient if the paper-feeding roller is used for a long time.

The rubber roller disclosed in Japanese Patent Application Laid-Open No. 11-236465 is excellent in its friction coefficient. However, when the rubber roller is used for the ink jet printer or the like, there is a possibility that the trace of the rubber roller is left on paper and there is room for improvement in obtaining a high friction coefficient and in the affinity between the rubber roller and the recording liquid.

The present invention has been made in view of the above-described problems. Thus, it is an object of the present invention to provide a material having a high mechanical strength and useful for application required to have an affinity for a polar component and particularly a composition suitable for a paper-feeding roller or the like.

It is another aim of the present invention to provide a paper-feeding roller, for use in a paper supply mechanism in an ink jet printer or the like, which has a affinity for recording-liquid higher affinity especially for the polar aqueous ink, does not leave the trace of the paper-feeding roller on a printed portion of paper when a recording liquid is applied to the paper, is excellent in its durability and wear resistance characteristic with a high load being applied thereto, has a high friction coefficient, and maintains the high friction coefficient.

DISCLOSURE OF THE INVENTION

As a result of their energetic researches, the present inventors have found that by developing the technique of adding a maleic acid-modified polymer as a compatibilizing agent to a matrix consisting of an elastomer component consisting of one or more rubbers selected from diene rubber, EPM and EPDM to alloy a polymer efficiently and finely dispersing particles of a polyamide thermoplastic resin at less than $1\mu m$ in an average diameter thereof, wherein said particles consist of smaller particles having an average diameter of 10 to 100 nm and larger particles having an average diameter of 100 to 1,000 nm, it is possible to obtain an elastomer composition having a high mechanical strength and useful for application demanded to have an affinity for a polar component. The present inventors have also found that when this composition is formed into a paper-feeding rubber roller for an office automation apparatus and an automatic deposit payment machine (ATM), the rubber roller has a high friction coefficient, is capable of maintaining the high friction coefficient, and has a high affinity for an aqueous recording liquid (polar).

That is, the present invention provides an elastomer composition in which a maleic acid-modified polymer as a compatibilizing agent is added to an elastomer component consisting of a diene rubber, EPM and/or EPDM, and particles of a polyamide thermoplastic resin are finely dispersed in a matrix consisting of the elastomer component at less than $1\mu m$ in an average particle diameter, wherein said particles consist of smaller particles having an average diameter of 10 to 100 nm and larger particles having an average diameter of 100 to 1,000 nm.

As described above, in the elastomer composition of the present invention, particles of the polyamide thermoplastic resin excellent in its mechanical strength such as the tear strength and having a high polarity are finely dispersed in the matrix consisting of the elastomer component at less than 1μm in the average particle diameter thereof. The compatibilizing agent is added to the elastomer component to enhance the compatibility between the elastomer component and the polyamide thermoplastic resin. Thus after fusing-press involving a crosslinking reaction and molding finish, the polyamide thermoplastic resin is nano-dispersed. By performing fusing-press, the polyamide thermoplastic resin flows and a phase separation does not progress. Thus it is possible to obtain the composition excellent in its mechanical strength and having a high polarity and affinity and use it for a paper-feeding roller and for products such as a tire which always requires a high friction coefficient even though it is worn.

Therefore the paper-feeding roller composed of the elastomer composition of the present invention has high durability and excellent wear-resistant characteristic with a high load being applied thereto and in addition a high friction coefficient which can be held. Further the paper-feeding roller has a high affinity for a polar recording liquid such as aqueous ink, does not leave the trace of the paper-feeding roller and thus provides preferable images.

The reason the particles of the polyamide thermoplastic resin are finely dispersed in the elastomer component at less than 1μm in the average particle diameter thereof is as follows: If the average diameter is larger than 1μm, when the elastomer composition is worn, cracks are liable to occur at the interface between the rubber and the resin and further the compression set becomes large. It is more favorable that the particles of the polyamide thermoplastic resin are finely dispersed at not less than 10nm nor more than 500nm in the average particle diameter thereof.

The average particle diameter is the value obtained by an evaluation method which is carried out by using a scanning probe microscope. The method will be described later.

The elastomer composition of the present invention has a morphology that the particles of the polyamide thermoplastic resin consist of smaller particles having an average diameter of several tens of nanometers and larger particles having an average diameter of several hundreds of nanometers, with the smaller particles and the larger particles present mixedly with each other. The mechanism in which the particle diameter is divided into the two kinds is considered as follows: That is, on the interface between the elastomer component and the polyamide thermoplastic resin, the compatibilizing agent and the polyamide thermoplastic resin react with each other to form a graft polymer. A part of the graft polymer which has been extracted from the interface forms the domain of smaller particles having the size of several tens of nanometers, whereas a domain of the polyamide thermoplastic resin which has not been extracted form the interface but is left thereon forms the domain of larger particles having the size of several hundreds of nanometers.

Examining the result of the paper-feeding performance of the paper-feeding roller composed of the elastomer composition, it has been revealed that the domain having the size of several tens of nanometers improves the wear resistance and that the domain having the size of several hundreds of nanometers improves the friction coefficient. That is, it is considered that the wear resistance is not necessarily affected favorably by only the domain having the size of several hundreds of nanometers and can be enhanced and a high friction coefficient can be realized by the two kinds of the domains present mixedly. Thus both performances can be improved in a good balance.

More specifically, the smaller particles whose average diameter is several tens of nanometers have a diameter of 10nm to 100nm. The larger particles whose average diameter is several hundreds of nanometers have a diameter of 100nm to 1000nm. When the average diameter is in the above-described range, the particles can be shaped in various configurations, for example, spherical, fiber-shaped, columnar, elliptic, and the like. It is preferable that the smaller particles and the larger particles are not unevenly distributed but dispersed uniformly.

It is preferable that the volume ratio between the smaller particles and the larger particles (smaller particles: larger particles)is set to (30:70) to (70:30).

The reason the volume ratio is set to the above range is that if the volume ratio of the smaller particles is smaller than the above-described range, it is difficult to improve the wear resistance. On the other hand, if the volume ratio of the smaller particles is larger than the above-described range, it is difficult to improve the friction coefficient.

It is favorable that the weight of the compatibilizing agent to be added to the elastomer component is not less than 0.1 times nor more than one time that of the polyamide thermoplastic resin (amount of resin obtained by excluding amount of oil in the case of oil-extended resin). It is more favorable that the weight of the compatibilizing is not less than 0.2 times nor more than 0.7 times that of the polyamide thermoplastic resin.

The reason the above-described range is set is that if the ratio of the compatibilizing agent is less than above-described range, the amount of the compatibilizing agent which makes a reaction on the interface of the polyamide is short, which makes it difficult to finely disperse the polyamide thermoplastic resin in the elastomer component. On the other hand, if the ratio of the compatibilizing agent is more than above-described range, the characteristic (property) of the material is affected adversely by the compatibilizing agent. Further the compatibilizing agent is expensive, which makes the cost of the elastomer composition high.

The volume ratio between the said elastomer component and the said polyamide thermoplastic resin (elastomer component:polyamide thermoplastic resin) is set to (99.9:0.1) to (70.0:30.0). The volume ratio therebetween is set to favorably (99.9:0.1) to (86.0:14.0), more favorably (99.0:1.0) to (87.5:12.5), and most (99.0:1.0) to (92.0:8.0). Thereby it is possible to make the polyamide thermoplastic resin finer and easy to obtain the elastomer composition of the present invention.

When the volume fraction of the elastomer component is less than this range, the dispersion phase of the polyamide thermoplastic resin becomes dense or becomes a matrix phase. On the other hand, when the volume fraction of the elastomer component is more than this range, the amount of the elastomer component becomes so large that the characteristic to be produced by the polyamide thermoplastic resin deteriorates.

The volume of the elastomer component described in the present specification means the total of rubber and extended oil in the case of the oil extended rubber. Similarly, the volume of the polyamide thermoplastic resin means the total of resin and extended oil in the case of the extended polyamide thermoplastic resin. When a plasticizer and a compatibilizing agent are used by dissolving them in the rubber or the resin, the volume of the rubber or the resin means the total including the plasticizer and the compatibilizing agent. As the amount of the polyamide thermoplastic resin increases, the particle diameter is liable to become increasingly large and hence it becomes difficult to accomplish uniform fine dispersion.

By setting the volume ratio (volume fraction) of the elastomer component to the above-described range, it is easy to disperse the polyamide thermoplastic resin finely at less than $1\mu$m in the average diameter of particles thereof. It is preferable to alloy the polymer and finely disperse the polyamide thermoplastic resin by using a reactive blending technique. The reactive blending technique is useful for developing a high-performance polymer alloy and allows fusing kneading and a chemical reaction leading compatibility to progress simultaneously, thus providing an excellent mechanical characteristic and a new function.

According to the present invention one or more rubbers selected from diene rubber, EPM, and EPDM are used as the elastomer component and it is preferred to use various kinds of nylons as the polyamide thermoplastic resin.

As the elastomer component, it is preferable to use the ethylene-propylene-diene copolymer rubber (EPDM) because the main chain thereof consists of saturated hydrocarbons and does not contain double bonds. Thus even though the EPDM is exposed to a high-concentration ozone atmosphere or irradiated with light beams for a long time, the molecular main chain thereof is hardly cut and excellent in weatherability.

It is possible to realize a low hardness and thus obtain a paper-feeding roller having high feeding performance by oil-extending the diene rubber, the EPM or the EPDM or by using these rubbers together with a softener. The diene rubber, the EPM, and the EPDM can be easily crosslinked with organic peroxides.

As the polyamide thermoplastic resin, general-purpose nylon resin such as nylon 6, nylon 66, nylon 11, and nylon 12 can be suitably used, because these nylon resins cost comparatively low and can be efficiently compatibilized with a maleic acid-modified polymer by grafting these nylon resins onto the maleic acid-modified polymer by utilizing terminal amino groups of the polyamide thermoplastic resin. To improve the paper feeding performance, the polyamide thermoplastic resin can be oil-extended within the range in which bleeding does not occur. The addition amount of the oil-extended plasticizer is favorably not less than 5 parts by weight nor more than 150 parts by weight thereof and more favorably not less than 10 parts by weight nor more than 100 parts by weight thereof for 100 parts by weight of the resin.

According to the present invention a maleic acid-modified polymer is used as the compatibilizing agent for compatibilizing the polyamide thermoplastic resin with one or more rubbers selected from among the diene rubber, the EPM, and the EPDM. By using the above-described compatibilizing agent, it is possible to effectively alloy a small amount of the polyamide thermoplastic resin with the diene rubber, the EPM or the EPDM having a low degree of compatibility.

By using the maleic acid-modified polymer, maleic anhydride contained in the molecule of the maleic acid-modified polymer reacts with the terminal amino group of the polyamide thermoplastic resin to form a grafted compatibilizing agent. Thus the polyamide thermoplastic resin and the diene rubber, the EPM or the EPDM can be compatibilized very efficiently with each other.

As the above-described maleic acid-modified polymer, it is possible to use maleic acid-modified ethylene ethyl acrylate (EEA), maleic acid-modified ethylene-propylene rubber, maleic acid-modified ethylene-propylene-diene rubber, and maleic acid-modified styrene thermoplastic elastomer. By using the maleic acid-modified ethylene-propylene rubber or the maleic acid-modified styrene thermoplastic elastomer, there is little deterioration in the properties. Thus it is possible to provide a preferable paper-feeding roller. Of these maleic acid-modified polymer, the maleic acid-modified ethylene-propylene rubber can be most suitably used.

It is preferable that the rubber is oil-extended and that its molecular weight is as large as possible. For example, it is possible to use Esprene 670F and 601F produced by Sumitomo Kagaku Kogyo Kabushiki Kaisha and Keltan 509×100 produced by Idemitsu DMS Inc.

In oil-extending the rubber, the addition amount of the oil to be extended is not less than 15 parts by weight nor more than 600 parts by weight and favorably not less than 25 parts by weight nor more than 400 parts by weight for 100 parts by weight of the rubber in view of its hardness and paper-feeding performance.

As the softener, the oil and the plasticizer can be used and those having a low polarity can be suitably used. As the oil, it is possible to use mineral oil such as paraffin oil, naphthenic oil, aromatic series; and known synthetic oil consisting of oligomer of hydrocarbon series, and process oil. As the synthetic oil, it is possible to use oligomer of $\alpha$-olefin, oligomer of butane, and amorphous oligomer of ethylene and $\alpha$-olefin. The paraffin oil is most favorable because it is less volatile and thus can be handled easily and a quantified amount can be securely added.

As the plasticizer, it is possible to use dioctyl phthalate (DOP), dibutyl phthalate (DBP), dioctyl sebacate (DOS), dioctyl adipate (DOA), and tricresyl phosphate singly or as a mixture in the range in which the degree of the compatibility between the rubber and the plasticizer does not deteriorate and the trace of the paper-feeding roller is not left.

When the oil is used as the softener, the addition amount of the softener is not less than 15 nor more than 600 parts by weight thereof and favorably not less than 25 nor more than 400 parts by weight thereof for 100 parts by weight of the rubber.

If the part by weight of the oil is less than 15, there is a possibility that the hardness of the paper-feeding roller is so high that it is difficult for the paper-feeding roller to obtain a proper degree of hardness. On the other hand, if the part by weight of the oil is more than 600, the oil may bleed from the surface of the dynamically crosslinked rubber component or inhibit crosslinking. Consequently the rubber component cannot be crosslinked sufficiently and the properties thereof deteriorate.

When the plasticizer is used as the softener, not less than 10 nor more than 500 parts by weight of the plasticizer and favorably not less than 15 nor more than 400 parts by weight thereof is added to 100 parts by weight of the rubber.

Regarding the crosslinking agent, peroxide crosslinking or resin crosslinking are preferable in that peroxide crosslinking or resin crosslinking hardly cause blooming and a compression set to be low.

It is preferable that the elastomer composition is crosslinked with peroxides. As peroxides to be used to crosslink the elastomer composition, it is possible to use

2,5-dimethyl-2,5-di(t-butyl peroxy)hexyne-3; dicumyl peroxide,

1,1-bis(t-butyl peroxy)3,3,5-trimethylcyclohexane,

2,5-dimethyl-2,5-di(t-butyl peroxy)haxane, benzoyl peroxide,

2-5 dimethyl 2-5-di(benzoyl peroxy)hexane,

di-t-butyl peroxy-m-diisopropyl benzene,

t-butyl peroxybenzoate, t-butyl peroxycumene, and

di-t-butyl peroxide. These peroxides can be selectively used according to the melting point and softening point of the polyamide thermoplastic resin and the stay time period in a kneader.

The addition amount of the peroxide is normally not less than 0.1 nor more than 30 parts by weight thereof and more favorably not less than 0.5 nor more than 10 parts by weight thereof for 100 parts by weight of the elastomer component (amount of rubber component obtained by excluding amount of oil in the case of oil-extended rubber).

In performing crosslinking by using the peroxide, to improve and adjust the mechanical properties such as fatigue characteristic and improve the crosslinking concentration, the crosslinking assistants such as the following polyfunctional monomers may be used: triallyl isocyanurate (TAIC), triallyl cyanurate (TAC), trimethylol propane methacrylate (TMPT), ethylene glycol dimethacrylate (EDMA), and N-N'-m-phenylenebismaleimide. As necessary, resin crosslinking and sulfur crosslinking may be used in combination with the peroxide crosslinking.

A resin crosslinking agent is used in the resin crosslinking. The resin crosslinking agent is a synthetic resin that causes the rubber to make a crosslinking reaction by heating or the like. The resin crosslinking agent is preferable because bloom does not occur, although bloom occurs in the case where sulfur and a vulcanizing accelerator are used in combination. Paper-feeding performance can be enhanced by using phenol resin as the resin crosslinking agent. As other resin crosslinking agents, melamine-formaldehyde resin, triazine·formaldehyde condensate, and hexametoxymethyl-melamine resin can be used. The phenolic resin is particularly favorable. As the phenolic resin, it is possible to use phenolic resins synthesized by reaction of phenols such as phenol, alkylphenol, cresol, xylenol, and resorcin with aldehydes such as formaldehyde, acetic aldehyde, and furfural. It is preferable to use alkylphenol-formaldehyde resin resulting from the reaction of formaldehyde with alkylphenol having alkyl group connected to the ortho position or the para position of benzene, because the alkylphenol-formaldehyde resin is compatible with the rubber and reactive, thus making a crosslinking reaction start time comparatively early. Alkyl group of the alkylphenol-formaldehyde resin has 1 - 10 carbon atoms. Methyl group, ethyl group, propyl group, and butyl group are exemplified. As the resinous crosslinking agent, it is possible to use modified alkylphenol resin formed by addition condensation of sulfonated-para-tertiary butyl phenol sulfide and aldehydes; and alkylphenol sulfide resin.

The addition amount of the resin crosslinking agent is favorably not less than 1 nor more than 50 parts by weight thereof and more favorably not less than 6 nor more than 15 parts by weight thereof for 100 parts by weight of the elastomer component (amount of rubber obtained by excluding amount of oil in the case of oil-extended rubber).

In the present invention, the crosslinking or partial crosslinking (dynamic crosslinking) may be accomplished in the presence of halogen (chloride, bromide, fluoride, and iodine). To allow the halogen to be present in the dynamic crosslinking, a halogenated resinous crosslinking agent is used or a halogen donor is added to the elastomer composition. As the halogenated resinous crosslinking agent, halogenated resins of the above-described addition condensation type can be used. Above all, halogenated phenol resin having at least one halogen atom connected to the aldehyde unit of the phenolic resin is favorable. Halogenated alkylphenol formaldehyde resin is most favorable because it is compatible with the rubber and reactive and makes a crosslinking reaction start time comparatively early.

A crosslinking assistant (activator) may be used to accomplish a cross-linking reaction properly. A metal oxide is used as the crosslinking assistant. As the metal oxide, zinc oxide and zinc carbonate are preferable.

In addition to the above-described additives, the elastomer composition may contain an age resistor, wax, and the like if necessary. As the age resistor, it is possible to use imidazoles such as 2-mercaptobenzimidazole; amines such as phenyl-$\alpha$-naphthylamine, N,N'-di-$\beta$-naphthyl-p-phenylenediamine, and N-phenyl-N'-isopropyl-p-phenylenediamine; and phenols such as di-t-butyl-p-cresol, and styrenated phenol. It is preferable to use a plurality of age resistors.

The addition amount of the age resistor is favorably not less than 0.5 nor more than 10 parts by weight thereof and more favorably not less than 1 nor more than 3 parts by weight thereof for 100 parts by weight of the elastomer component (amount of rubber obtained by excluding amount of oil in the case of oil-extended rubber).

Fillers may be contained in the elastomer composition as necessary to improve the mechanical strength thereof. As fillers, it is possible to use powder of silica, carbon black, clay, talc, calcium carbonate, dibasic lead phosphite (DLP), basic magnesium carbonate, and alumina. It is preferable that the addition amount of the filler is not more than 30 wt% for the entire elastomer composition. This is because the addition of the filler is effective for improving the tensile strength of the rubber and its tear strength, but if the addition amount of the filler is too much, the flexibility of the rubber is deteriorated greatly.

As a result of their energetic researches, the present inventors have found that by dispersing a small amount of the polyamide thermoplastic resin in the rubber or/and the thermoplastic elastomer, the paper-feeding roller formed from the elastomer composition has a high friction coefficient and after paper is supplied thereto, the paper-feeding roller maintains the high friction coefficient and further has a high affinity for the aqueous (polar) recording liquid.

Further the present invention provides a paper-feeding roller formed from an elastomer composition, serving as a main component thereof. The volume ratio between the elastomer component and the polyamide thermoplastic resin (the elastomer component:the polyamide thermoplastic resin) is set to (99.9:0.1) to (87.5:12.5).

By setting the volume ratio between the elastomer component and the polyamide thermoplastic resin (elastomer component:polyamide thermoplastic resin) to (99.9:0.1) to (87.5:12.5), it is possible to realize a high friction coefficient and low hardness and in addition obtain a paper-feeding roller which is excellent in its wear resistance and has higher paper-feeding performance and a small compression set. The volume ratio therebetween is set to favorably (99.5:0.5) to (87.5:12.5) and more favorably (98.5:1.5) to (92.0:8.0).

The reason the volume ratio is set to the above range is that if the volume fraction of the elastomer component is less than 87.5, the hardness of the elastomer composition is so high that the elastomer composition does not have sufficient paper-feeding performance and is unsuitable for putting it into practical use. On the other hand, if the volume fraction of the elastomer component is larger than 99.9, the characteristic of the high paper-feeding performance to be produced by the polyamide thermoplastic resin deteriorates and further the effect of improving the affinity of the elastomer composition for the polar recording liquid such as the aqueous ink deteriorates.

The hardness of the paper-feeding roller measured by an A-type hardness meter of JIS6301 is 15 to 60 degrees, favorably 20 to 55 degrees, and more favorably 20 to 50 degrees. In this range, when the paper-feeding roller is pressed against paper or a film at a comparatively small force, the paper-feeding roller deforms sufficiently and it is possible to obtain a large contact area between the paper-feeding roller and the paper or the film.

The thickness of the paper-feeding roller formed cylindrically from the elastomer composition is set to 0.5mm to 20mm, and favorably 1mm to 5mm. Although it is necessary to set the thickness of the paper-feeding roller in dependence on the balance between the paper-feeding roller and paper, a large contact area can be hardly formed between the paper-feeding roller and paper by the deformation of the paper-feeding roller, if the thickness of the paper-feeding roller is too small. On the other hand, if the thickness of the paper-feeding roller is too large, it is necessary to bring the paper-feeding roller into contact with paper at a large pressure to deform the paper-feeding roller. Consequently a mechanism for bringing the paper-feeding roller into contact with paper under pressure is necessarily large. A core is inserted into a hollow portion of the paper-feeding roller or can be fixed to the hollow portion by bonding the core to the hollow portion with an adhesive agent.

It is preferable to mix the plasticizer, the compatibilizing agent, the age resistor, and the like if necessary with the rubber and knead them by a kneader to form a rubber master batch. Thereby it is possible to improve workability and dispersibility. It is also preferable to form a polyamide thermoplastic resin master batch.

The elastomer composition of the present invention and the paper-feeding roller formed therefrom can be manufactured by the following method:

Preparation of the resin master batch is described below. The compatibilizing agent is kneaded into the polyamide thermoplastic resin by a biaxial extruder, a kneader or a Banbury mixer or the like. Kneading is performed at 160°C to 280°C for 1 to 20 minutes. Thereafter the thermoplastic resinous composition should be pelletized by a conventional method to prepare a pellet of the resin master batch.

Preparation of the rubber master batch is described below. The plasticizer such as paraffin oil, the compatibilizing agent, the age resistor, and the filler are kneaded into the rubber component such as the diene rubber, the EPM or the EPDM by the biaxial extruder, the kneader or the Banbury mixer. Kneading is performed at 20°C to 250°C for 1 to 20 minutes. Thereafter the composition should be pelletized by a conventional method to prepare a pellet of the rubber master batch. The compatibilizing agent is kneaded into the resin master batch at a high temperature. When the maleic acid-modified polymer is used as the compatibilizing agent, after the maleic acid-modified polymer is allowed to react with the terminal amino group of the polyamide thermoplastic resin, polymer blending may be made. Alternatively when the polymer blending is performed, the compatibilizing agent may be added to the rubber master batch or the resin master batch by dry-blending.

The molding method is described below.

The pellet of the rubber master batch, the pellet of the resin master batch, and necessary additives including zinc white, the age resistor, the filler are supplied to the biaxial extruder. After they are kneaded for 1 to 20 minutes while they are being heated at 160˚C to 280˚C, the blended elastomer component and resin are extruded. After the crosslinking agent is kneaded into the elastomer composition consisting of the extruded kneaded rubber, they are kneaded by an open roll. Then the mixture is press-molded at 170˚C to 230˚C. It is preferable to cut the obtained elastomer composition to a predetermined size to form the paper-feeding roller. The surface of the paper-feeding roller may be polished as necessary.

The paper-feeding roller is classified into three kinds: A roller rotated in a paper-feeding direction to feed paper ("pick up" (one roller is used) and "feed" (used in combination with a roller "retard" described below); and the roller "retard" used by applying a torque in a direction opposite to the paper-feeding direction to prevent sheets of paper from being fed one over the other. The paper-feeding roller of the present invention can be used as the roller of these three kinds. The paper-feeding roller can be formed in various configurations, for example, cylindrical and special configurations such as D-shaped.

BRIEF DESCRIPTION OF THE DRAWINGS

Fig. 1 is a schematic view showing a paper-feeding roller of the present invention.
Fig. 2 shows photographs, taken by a scanning probe microscope (SPM), showing the elastomer composition of the present invention.
Fig. 3 is a schematic view showing an apparatus for measuring the friction coefficient of the paper-feeding roller.

BEST MODE FOR CARRYING OUT THE INVENTION

The embodiments of the present invention will be described below with reference to the drawings.

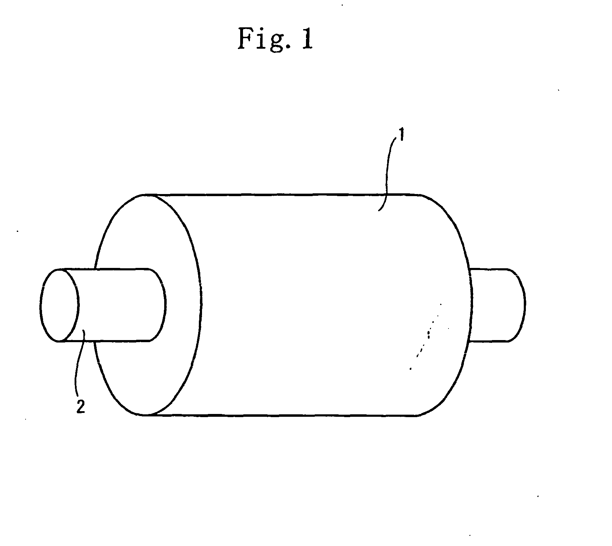

Fig. 1 shows a cylindrical paper-feeding roller 1 according to a first embodiment of the present invention. A columnar core (shaft) 2 is inserted into a hollow portion of the paper-feeding roller by press fit.

Oil-extended EPDM is used as the rubber for the paper-feeding roller 1. Particles of oil-extended nylon resin which is a polyamide thermoplastic resin are nano-dispersed in the oil-extended EPDM at less than $1\mu m$ in the average diameter thereof. The paper-feeding roller formed from an elastomer composition used as the main material for the paper-feeding roller 1 has a morphology that the polyamide thermoplastic resin consists of smaller particles having a size of several tens of nanometers and larger particles having a size of several hundreds of nanometers with the smaller particles and the larger particles present mixedly with each other. The smaller particles and the larger particles are not unevenly distributed but uniformly dispersed. The volume ratio between the EPDM and the polyamide thermoplastic resin is set to 98.0:2.0. As a compatibilizing agent, a maleic acid-modified polymer is used. The compatibilizing agent is used in a weight 0.25 times as large as that of the polyamide thermoplastic resin. The compatibilizing agent is alloyed and dispersed finely by the reactive blending technique.

More specifically, in this embodiment, the diameter of the smaller particles having the average diameter of several tens of nanometers is 10nm to 100nm, and the diameter of the larger particles having the average diameter of several hundreds of nanometers is 100nm to 1000nm. The smaller and larger particles are approximately spherical and uniformly dispersed in an elastomer component composing the matrix. The volume ratio between the smaller and larger particles has very little partial fluctuation and is almost uniform in the composition. The volume ratio between the smaller and larger particles is set to the range of (30:70) to (70:30).

The paper-feeding roller 1 is formed as described below.

By using a kneader, a plasticizer, an age resistor, and the like are kneaded into the oil-extended EPDM, and kneading is performed at 20˚C to 250˚C for 1 to 20 minutes. Thereafter the rubber composition is pelletized by a conventional method to prepare the pellet of the rubber master batch. The weight ratio between the oil contained in the oil-extended EPDM and the rubber component is set to 1:1.

Thereafter by using the kneader, the compatibilizing agent is kneaded into an oil-extended nylon resin. They are kneaded for 1 to 20 minutes while they are being heated at 160˚C to 280˚C. Thereafter the thermoplastic resin composition is pelletized by a conventional method to prepare the pellet of the resin master batch.

Thereafter the pellet of the rubber master batch, the pellet of the resin master batch, zinc white, an age resistor, a filler are supplied to a biaxial extruder HTM38 (manufactured by Ibeck Inc.). After they are kneaded for 1 to 20 minutes while they are being heated at 160°C to 280°C, the blended rubber and resin are extruded. After the crosslinking agent consisting of a peroxide is kneaded into the extruded kneaded rubber by an open roll, the mixture is press-molded at 170°C to 230°C. Then the obtained elastomer composition is cut to a predetermined size to form the paper-feeding roller 1.

The paper-feeding roller 1 is formed from the elastomer in which a small amount of the polyamide thermoplastic resin having a high mechanical strength and a high polarity is finely dispersed in the oil-extended EPDM having a low polarity. Therefore the paper-feeding roller 1 has a high frictional force and is excellent in the performance of holding the high frictional force. Further the paper-feeding roller 1 has a low hardness and high paper-feeding performance. Furthermore it is possible to prevent the paper-feeding roller 1 from generating bleeding and provide the paper-feeding roller 1 with a high affinity for the aqueous ink (polar). Thus the paper-feeding roller 1 does not leave the trace of the paper-feeding roller on paper and provides a preferable image. Moreover the paper-feeding roller 1 is excellent in its wear resistance and optimum for the ink jet printer.

In the above-described embodiment, the EPDM is used as the elastomer component. In addition, EPM, diene rubber, a styrene thermoplastic elastomer, and an olefin thermoplastic elastomer may be used. It is possible to appropriately set the kind of the polyamide thermoplastic resin and the compatibilizing agent and the amount thereof. Further the elastomer composition may be crosslinked with resin or sulfur.

The examples 1 through 3 of the composition and the paper-feeding roller of the present invention and the example 4 of the composition of the present invention and the comparison examples 1 through 3 will be described below.

The paper-feeding roller of the present invention was formed from the elastomer composition containing the components shown in tables 1 and 2. After the components are molded by heat press and a method similar to that of the above-described embodiment, the obtained elastomer composition is cut to prepare the cylindrical paper-feeding roller of the examples 1 through 3 having an outer diameter of 19.7mm, in an inner diameter of 10mm, and a width of 10mm.

By kneading and thermally press-molding the components of the example 4 shown in table 1 by carrying out a method similar to that of the above-described embodiment, the elastomer composition of the example 4 was prepared. By using the composition of the example 4, a paper-feeding roller was prepared by a method similar to that of the above-described embodiment.

Table 1

| component | name of component | | maker | E1 | E2 | E3 | E4 |
|---|---|---|---|---|---|---|---|
| rubber 1 | Esprene 670F | EPDM(oil-extended by 100%) | Sumitomo Kagaku Kogyo Inc. | 200 | 200 | 200 | 200 |
| rubber 2 | Esprene 505A | EPDM(not oil-extended) | Sumitomo Kagaku Kogyo Inc. | | | | |
| | | | | | | | |
| plasticizer | Diana process oil PW-380 | paraffin oil | Idemitsu Kosan Inc. | | | | |
| | | | | | | | |
| age resistor 1 | IRGANOX 1098 | N,N-hexane-1,6-diylbis[(3-(3,5-di-t-butyl-4-hydroxyphenyl : propionamide) | Chiba Specialty Chemicals Inc. | 0.50 | 0.50 | 0.50 | 0.50 |
| age resistor 2 | TINUVIN 622LD | polymerization product of dimethyl succinate and 4-hydroxy-1,2,6,6-tetramethyl-1-piperidineethanol | Chiba Specialty Chemicals Inc. | 0.50 | 0.50 | 0.50 | 0.50 |
| age resistor 3 | copper iodide(I) | copper iodide (I) | Kishida Kagaku Inc. | 0.05 | 0.05 | 0.05 | 0.05 |
| compatibilizing agent | JSR T774IP | maleic acid-added ethylene-propylene copolymer | JSR Inc. | 0.75 | 1.25 | 2.50 | 10.00 |
| polyamide resin | Rilsun MB3610 | oil-extended nylon 11 | Elf·Atochem Inc. | 3.0 | 5.0 | 10.0 | 0.0 |
| crosslinking agent 1 | Parkmill D | dicumyl peroxide | Nippon Yushi Inc. | 1.5 | 1.5 | 1.5 | 1.5 |

EP 1 477 523 B1

(continued)

| component | name of component | | maker | E1 | E2 | E3 | E4 |
|---|---|---|---|---|---|---|---|
| | | | | | | | |
| volume ratio between rubber and resin | | | | 98.8:1.2 | 98.0:2.0 | 96.0:4.0 | 86.0:14.0 |
| particle diameter (run) of polyamide thermoplastic resin smaller-diameter particle → | | | | several tens of nm | several tens of nm | several tens of nm | several tens of nm |
| | | larger-diameter particle → | | several hundreds of nm | several hundreds of nm | several hundreds of nm | several hundreds of nm |
| | | | | | | | |
| hardness | | | | 26 | 26 | 26 | 39 |
| initial friction coefficient | | | | 1.8 | 1.9 | 1.8 | 1.5 |
| friction coefficient after supply of 30000 sheets | | | | 1.7 | 1.8 | 1.7 | 1.3 |
| wear amount (mg) after supply of 30000 sheets | | | | 117 | 119 | 96 | 118 |
| evaluation of trace of roller | | | | △ | ○ | ○ | ○ |
| compression set(%) | | | | 29 | 27 | 26 | 39 |

where E denotes example.

Table 2

| component | name of component | | maker | CE1 | CE2 | CE3 |
|---|---|---|---|---|---|---|
| rubber 1 | Esprene 670F | EPDM(oil-extended by 100%) | Sumitomo Kagaku Kogyo Inc. | 200 | 200 | |
| rubber 2 | Esprene 505A | EPDM(not oil-extended) | Sumitomo Kagaku Kogyo Inc. | | | 100 |
| | | | | | | |
| plasticizer | Diana process oil PW-380 | paraffin oil | Idemitsu Kosan Inc. | | | 40 |
| | | | | | | |
| age resistor 1 | IRGANOX 1098 | N,N-hexane-1,6-diylbis[(3-(3,5-di-t-butyl-4-hydroxyphenyl propionamide) | Chiba Specialty Chemicals Inc. | | 0.50 | |
| age resistor 2 | TINUVIN 622LD | polymerization product of dimethyl succinate and 4-hydroxy-1,2,6,6-tetramethyl-1piperidineethanol | Chiba Specialty Chemicals Inc. | | 0.50 | |
| age resistor 3 | copper iodide (I) | copper iodide (I) | Kishida Kagaku Inc. | | 0.05 | |
| compatibilizing agent | JSR T774IP | maleic acid-added ethylene-propylene copolymer | JSR Inc. | | - | |
| polyamide resin | Rilsun MB3610 | oil-extended nylon 11 | Elf·Atochem Inc. | | 40.0 | |
| crosslinking agent 1 | Parkmill D | dicumyl peroxide | Nippon Yushi Inc. | 1.5 | 1.5 | 1.5 |
| | | | | | | |
| volume ratio between rubber and resin | | | | 100.0:0 | 86.0:14.0 | 100.0:0 |
| | | | | | | |
| particle diameter (nm) of polyamide thermoplastic resin smaller-diameter particle → | | | | - | not less than 1000 | - |
| larger-diameter particle → | | | | - | - | - |
| hardness | | | | 26 | 41 | 39 |
| initial friction coefficient | | | | 1.6 | 1.2 | 1.3 |
| friction coefficient after supply of 30000 sheets | | | | 1.3 | 1.0 | 1.1 |
| wear amount (mg) after supply of 30000 sheets | | | | 102 | 250 | 115 |
| evaluation of trace of roller | | | | × | △ | × |

(continued)

| component | name of component | | maker | CE1 | CE2 | CE3 |
|---|---|---|---|---|---|---|
| compression set(%) | | | | 28 | 45 | 26 |

where CE denotes comparison example.

The numerical values of the mixing amounts of the components in tables 1 and 2 are parts by weight. As the rubber 1 shown in table 1, the EPDM (oil-extended by 100%), namely, 200 parts by weight (100 parts by weight of rubber, 100 parts by weight of oil) of the EPDM rubber was used. As the polyamide resin, the oil-extended nylon 11 shown in the table was used.

• Examples 1 through 4

As shown in table 1, in the examples 1 through 4, the EPDM oil-extended by 100% was used as the elastomer component. As the compatibilizing agent, a maleic acid-added ethylene-propylene copolymer that is the maleic acid-modified polymer was used. As the polyamide thermoplastic resin, the oil-extended nylon 11 was used. The volume ratio between the rubber (EPDM+extended oil+compatibilizing agent) and the resin (nylon+extended oil) was set to 98.8:1.2 to 86.0:14.0. The nylon resin was nano-dispersed in an average particle diameter less than $1\mu$m. There was formed a morphology that the nylon resin consisted of smaller particles having the size of several tens of nanometers and larger particles having the size of several hundreds of nanometers, with the smaller particles and the larger particles present mixedly with each other. The elastomer composition was crosslinked with a peroxide. The distribution of the particle diameter is shown below. Each of the elastomer composition was formed by the reactive blending technique.

Example 1: ratio between smaller particle (10 to 100nm):larger particle (100 to 1000nm)=40:60.
Example 2: ratio between smaller particle (10 to 100nm):larger particle (100 to 1000nm)=50:50
Example 3: ratio between smaller particle (10 to 100nm):larger particle (100 to 1000nm)=60:40
Example 4: ratio between smaller particle (10 to 100nm):larger particle (100 to 1000nm)=20:80

• Comparison example 1 through 3

In the comparison example 1, the polyamide thermoplastic resin was not used, but the EPDM oil-extended by 100% was used similarly to the examples 1 through 4. The elastomer composition was crosslinked with the peroxide. The elastomer composition was formed by the reactive blending technique.

In the comparison example 2, the nylon resin was dispersed in an average diameter of not less than $1\mu$m. The comparison example 2 was different from the example 4 in that the compatibilizing agent was not used in the comparison example 2. That is, the reactive blending technique was not used.

In the comparison example 3, the polyamide thermoplastic resin was not used, but unextended EPDM was used unlike the examples 1 through 4. A plasticizer was added to the elastomer component.

The paper-feeding roller of each of the examples 1 through 3 and the comparison examples 1 through 3 was measured and evaluated by the method which will be described later on the particle diameter of the polyamide thermoplastic resin, the initial friction coefficient, the friction coefficient and the wear amount after 30,000 sheets of paper was supplied to each paper-feeding roller, the trace of the paper-feeding roller, the hardness, and the compression set. Tables 1 and 2 show the results.

• Particle diameter of polyamide thermoplastic resin

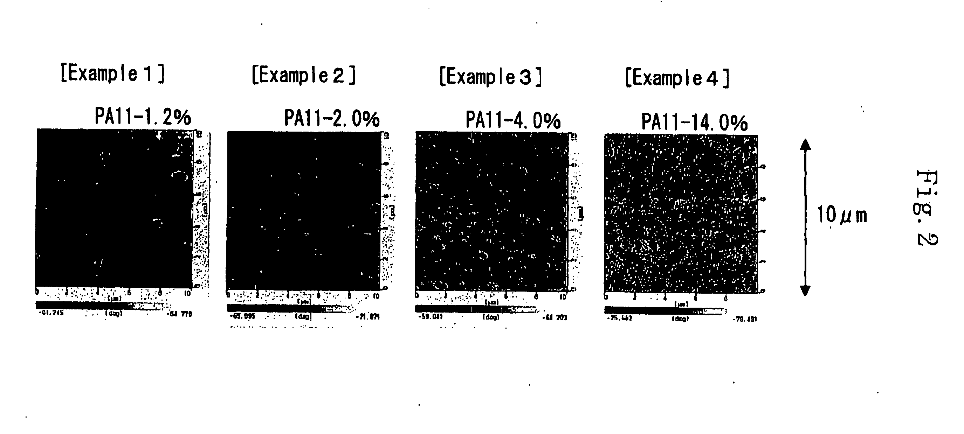

By using a scanning probe microscope (SPM), the composition of each of the examples 1 through 4 was observed to evaluate the morphology of the material and the particle diameter of the polyamide thermoplastic resin. Fig. 2 shows photographs of each composition observed by the microscope. In each of the photographs, the morphology of a sea-island structure was observed: island-shaped particles of the polyamide thermoplastic resin are dispersed finely in the matrix consisting of the sea-shaped EPDM. In the photographs, diameters of large dispersed particles are about several hundreds of nanometers, and those of small dispersed particles are about several tens of nanometers. The length of one side is $10\mu$m.

PA11-1.2% shown on the photographs is the volume fraction (volume ratio) of the polyamide thermoplastic resin to the EPDM.

• Evaluation of friction coefficient and abrasion loss

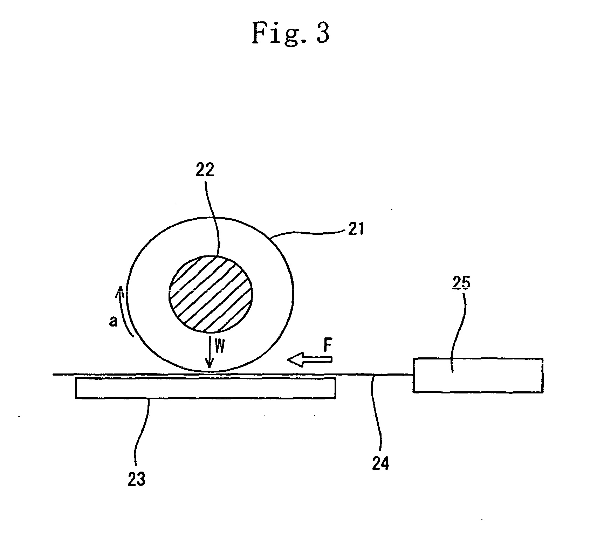

The friction coefficient was measured by the method, shown in Fig. 3, which will be described below. That is, a paper-feeding roller 21 was pressed against a plate 23 by applying a vertical load W (W=250gf) to a rotation shaft 22 of the paper-feeding roller 21 as shown with a black arrow of Fig. 3, with PPC paper (manufactured by Fuji Xerox Office Supply Kabushiki Kaisha) of size A4, connected with a load cell 25, sandwiched between the paper-feeding roller 21 and the plate 23. The paper-feeding roller 21 was rotated at a peripheral speed of 300/second in the direction shown with an arrow (a) of a solid line in Fig. 3 at a temperature of 22˚C and a humidity of 55%. A force F(gf) generated in the direction shown with the white arrow in Fig. 3 was measured before and after the supply of the paper to the paper-feeding roller 21. The friction coefficient μ was computed from the measured force F(gf) and the load W(250gf) and by using an equation shown below. The friction coefficient was measured at the time when the supply of paper started (initial friction coefficient) and after the supply of 30000 sheets of paper finished.
The wear amount (mg) was computed by measuring the weight of each paper-feeding roller before and after 30000 sheets of paper were supplied thereto.
The friction coefficient measured after the supply of 30000 sheets of paper finished was excellent when it was not less than 1.7, good when it was not less than 1.5, and bad when it was less than 1.5.

## Equation 1

$$\mu = F(gf)/W(gf)$$

• Evaluation of trace of paper-feeding roller

After the paper-feeding roller of each of the examples and the comparison examples was cleaned and left at 60˚C for two hours, it was set on a PM-770C printer manufactured by Seiko Epson. As printing paper, glossy paper MJA4SP3 for exclusive use of super-fine printing manufactured by Seiko Epson was used. After the paper-feeding roller, the printing paper, and ink were set, a print instruction of solid blue was issued under a super-fine image quality mode. Printed images were evaluated at the following three stages:

○: No trace of paper-feeding roller was formed.
Δ : The trace of the paper-feeding roller is admitted to a slight extent but no problem arises, if the paper-feeding roller is not used for a high-quality image-forming printer.
×: The trace of the paper-feeding roller is clearly admitted and thus cannot be put into practical use.

The ink used as the recording liquid was a polar aqueous ink (manufactured by Seiko Epson Inc., color ink cartridge IC5CL02W).

• Measurement of hardness

The hardness of the paper-feeding roller was measured by an A-type hardness meter specified in JIS6253.

• Measurement of compression set

The compression set of the paper-feeding roller was measured in accordance with the description of JIS-K6301. The unit of numerical values was %. It is preferable that the compression set is 0 to 30.
As shown in Fig. 2, in the paper-feeding roller of each of the examples 1 through 3, the polyamide thermoplastic resin was nano-dispersed in the rubber matrix in an average particle diameter less than 1μm. The paper-feeding roller formed from the elastomer composition has the morphology that the particles of the polyamide thermoplastic resin consist of one kind of particles having the diameter of several tens of nanometers and the other kind of particles having an average diameter of several hundreds of nanometers with the two kinds of the present mixedly with each other. As shown in table 1, in the elastomer composition, because the EPDM and the polyamide thermoplastic resin were present mixedly with each other at the specified volume ratio, the paper-feeding roller of each of the examples 1 through 3 had a lower hardness than the paper-feeding roller of the example 4. Therefore the paper-feeding roller of each of the examples 1 through 3 had a very high initial friction coefficient, maintained a high friction coefficient after supply of paper finished, and was excellent in its wear resistance. Further it was confirmed that the paper-feeding roller had high performance, i.e., was excellent in its compression set and hardness and had no trace of the paper-feeding roller.

As shown in Fig. 2, in the elastomer composition of the example 4, the polyamide thermoplastic resin was nano-dispersed in the rubber matrix in an average particle diameter less than 1μm. The elastomer composition has the morphology that the particles of the polyamide thermoplastic resin consist of one kind of particles having the diameter of several tens of nanometers and the other kind of particles having an average diameter of several hundreds of nanometers with the two kinds of the present mixedly with each other. Thus the elastomer composition of the example 4 has a high mechanical strength and is suitable for application demanded to have an affinity for a polar component. It was confirmed that the elastomer composition of the example 4 was more effective than the elastomer composition of the comparison example 3.

More specifically, the paper-feeding roller of each of the examples 1 through 3 was similar to that of the comparison example 1 in the wear resistance and the compression set thereof, was higher than that of the comparison example 1 in the initial friction coefficient thereof, and maintained a high friction coefficient after the supply of paper finished.

On the other hand, as shown in table 2, because the elastomer composition of the comparison examples 1 and 3 did not contain the polyamide thermoplastic resin, each elastomer composition had a low friction coefficient respectively before and after the supply of the paper to the paper-feeding roller formed from the elastomer composition. Further the trace of the paper-feeding roller was left on paper and thus it was confirmed that each paper-feeding roller was unsuitable for the paper-feeding roller.

In the elastomer composition of the comparison example 2, the polyamide thermoplastic resin was nano-dispersed in the rubber matrix in an average particle diameter less than 1μm, but had an average particle diameter not less than 1000 μm. Further the elastomer composition of the comparison example 2 did not have the morphology that the particles of the polyamide thermoplastic resin consist of one kind of particles having the diameter of several tens of nanometers and the other kind of particles having an average diameter of several hundreds of nanometers with the two kinds of the present mixedly with each other. Thus the paper-feeding roller formed from the elastomer composition of the comparison example 2 had a low friction coefficient before and after the supply of the paper thereto. Further the paper-feeding roller was unfavorable in the wear resistance and the compression set thereof, and the mark of Δ was given in the evaluation of the trace of the paper-feeding roller on paper. Thus it was confirmed the paper-feeding roller was unsuitable for the paper-feeding roller.

INDUSTRIAL APPLICABILITY

As apparent from the foregoing description, according to the present invention, the polyamide thermoplastic resin was nano-dispersed in the average particle diameter less than 1 μm in the elastomer component forming the rubber matrix. Thus the elastomer composition of the present invention has a high mechanical strength and is suitable for application demanded to have an affinity for the polar component. Thus it is possible to obtain the composition useful for the paper-feeding roller, tires, and the like.

Further by dispersing a small amount of the polyamide thermoplastic resin, the paper-feeding roller formed from the elastomer composition has a high friction coefficient and after paper is supplied thereto, the paper-feeding roller maintains the high friction coefficient and further has a high affinity for the aqueous (polar) recording liquid. Furthermore the paper-feeding roller has a low hardness, is flexible, is durable, and has an improved wear-resistant characteristic with a high load being applied thereto.

As described above, the paper-feeding roller of the present invention has characteristics such as a high friction coefficient and durability and has a high affinity for the polar recording liquid. Thus the paper-feeding roller can be used in a wide range. The paper-feeding roller can be suitably used as the roller of the paper supply mechanism of an ink jet printer, a laser printer, an electrostatic copying apparatus, a facsimile apparatus, an ATM which are required to feed objects, for example, thin paper or films by separately picking them up. Because the paper-feeding roller has a high affinity for the recording liquid and particularly the polar recording liquid, it can be preferably used for a high-quality image-forming printer.

**Claims**

1. An elastomer composition in which a maleic acid-modified polymer is added as compatibilizing agent to an elastomer component consisting of one or more rubbers selected from diene rubber, EPM and EPDM; and particles of a polyamide thermoplastic resin are finely dispersed in a matrix consisting of said elastomer component at less than 1 μm in an average particle diameter, wherein said particles consist of smaller particles having an average diameter of 10 to 100 nanometers and larger particles having an average diameter of 100 to 1,000 nanometers.

2. The elastomer composition according to claim 1, wherein a volume ratio between said smaller particles and said larger particles (smaller particles:larger particles) is (30:70) to (70:30).

3. The elastomer composition according to claim 1 or 2, wherein a weight of said compatibilizing agent to be added to said elastomer component is not less than 0.1 times nor more than one time that of said polyamide thermoplastic resin.

4. The elastomer composition according to any one of claims 1 through 3, wherein a volume ratio between said elastomer component and said polyamide thermoplastic resin (said elastomer component:said polyamide thermoplastic resin) is set to (99.9:0.1) to (70.0:30.0).

5. The elastomer composition according to any one of claims 1 through 4, wherein as said polyamide thermoplastic resin, various kinds of nylons are used.

6. The elastomer composition according to any one of claims 1 through 5, crosslinked with a peroxide.

7. A paper-feeding roller formed from the elastomer composition according to any one of claims 1 through 6, serving as a main component thereof, wherein a volume ratio between said elastomer component and said polyamide thermoplastic resin (said elastomer component:said polyamide thermoplastic resin) is set to (99.9:0.1) to (87.5:12.5).

**Patentansprüche**

1. Elastomerzusammensetzung, in der einer Elastomerkomponente bestehend aus einem oder mehreren, aus Dienkautschuk, EPM und EPDM ausgewählten Kautschuken ein Maleinsäure modifiziertes Polymer als Kompatibilisierungsmittel zugefügt ist, und in der Partikel eines thermoplastischen Polyamidharzes in einer Matrix bestehend aus der Elastomerkomponente mit einem durchschnittlichen Partikeldurchmesser von weniger als 1 $\mu$m fein dispergiert sind, wobei die Partikel aus kleineren Partikeln mit einem durchschnittlichen Durchmesser von 10 bis 100 Nanometern und größeren Partikeln mit einem durchschnittlichen Durchmessern von 100 bis 1.000 Nanometern bestehen.

2. Elastomerzusammensetzung nach Anspruch 1, wobei das Volumenverhältnis zwischen den kleineren Partikeln und den größeren Partikeln (kleinere Partikel : größere Partikel) (30 : 70) bis (70 : 30) beträgt.

3. Elastomerzusammensetzung nach Anspruch 1 oder 2, wobei das Gewicht des der Elastomerkomponente zuzufügenden Kompatibilisierungsmittels nicht weniger als 0,1 fach und nicht mehr als einfach des Gewichts des thermoplastischen Polyamidharzes beträgt.

4. Elastomerzusammensetzung nach einem der Ansprüche 1 bis 3, wobei das Volumenverhältnis zwischen der Elastomerkomponente und dem thermoplastischen Polyamidharz (die Elastomerkomponente : das thermoplastische Polyamidharz) auf (99,9 : 0,1) bis (70,0 : 30,0) eingestellt ist.

5. Elastomerzusammensetzung nach einem der Ansprüche 1 bis 4, wobei verschiedene Arten von Nylon als das thermoplastische Polyamidharz eingesetzt werden.

6. Elastomerzusammensetzung nach einem der Ansprüche 1 bis 5 quervernetzt mit einem Peroxid.

7. Papierfördernde Walze gebildet aus einer Elastomerzusammensetzung nach einem der Ansprüche 1 bis 6, welche als Hauptkomponente hiervon fungiert,
wobei das Volumenverhältnis zwischen der Elastomerkomponente und dem thermoplastischen Polyamidharz (die Elastomerkomponente : das thermoplastische Polyamidharz) auf (99,9 : 0,1) bis (87,5 : 12,5) eingestellt ist.

**Revendications**

1. Composition élastomère dans laquelle un polymère modifié par l'acide maléique est ajouté comme agent compatibilisant à un composant élastomère consistant en un ou plusieurs caoutchoucs choisis parmi un caoutchouc diène, un EPM et un EPDM ; et des particules d'une résine polyamide thermoplastique sont finement dispersées dans une matrice consistant en ledit composant élastomère, à moins de 1 $\mu$m de diamètre moyen de particules, **carac-**

**térisée en ce que** lesdites particules consistent en des particules plus petites ayant un diamètre moyen 10 à 100 nanomètres et des particules plus grandes ayant un diamètre moyen 100 à 1.000 nanomètres.

2. Composition élastomère selon la revendication 1, **caractérisée en ce qu'**un rapport volumique entre lesdites particules plus petites et lesdites particules plus grandes (particules plus petites/particules plus grandes) va de (30/70) à (70/30).

3. Composition élastomère selon la revendication 1 ou 2, **caractérisée en ce qu'**un poids dudit agent compatibilisant à ajouter audit composé élastomère n'est pas inférieur à 0,1 fois, ni supérieur à 1 fois à celui de ladite résine polyamide thermoplastique.

4. Composition élastomère selon l'une quelconque des revendications 1 à 3, **caractérisée en ce que** le rapport volumique entre ledit composant élastomère et ladite résine polyamide thermoplastique (ledit composant élastomère/ ladite résine polyamide thermoplastique) vaut de (99,9/0,1) à (70,0/30,0).

5. Composition élastomère selon l'une quelconque des revendications 1 à 4, **caractérisée en ce que** comme dite résine polyamide thermoplastique, diverses sortes de nylon sont utilisées.

6. Composition élastomère selon l'une quelconque des revendications 1 à 5, réticulée par un peroxyde.

7. Rouleau d'alimentation en papier, formé à partir de la composition élastomère selon l'une quelconque des revendications 1 à 6, qui sert de composant principal de celui-ci, **caractérisé en ce que** le rapport volumique entre ledit composant élastomère et ladite résine polyamide thermoplastique (ledit composant élastomère/ladite résine polyamide thermoplastique) vaut de (99,9/0,1) à (87,5/22,5).

Fig. 1

# Fig. 2

# Fig. 3